# EUROPEAN PATENT APPLICATION

(11) **EP 3 885 315 A1**
(43) Date of publication of application: **29.09.2021**
(21) Application number: 19902486.0
(22) Date of filing: 20.12.2019
(51) Int. Cl.: C01B 33/107

(54) **CHLOROSILANE MANUFACTURING METHOD**

(30) Priority: 27.12.2018 JP 2018244343
(71) Applicant: Tokuyama Corporation, Shunan-shi, Yamaguchi 745-8648 (JP)
(72) Inventor: OGIHARA, Katsuya, Shunan-shi, Yamaguchi 745-8648 (JP); IIYAMA, Shoji, Shunan-shi, Yamaguchi 745-8648 (JP); MATSUMURA, Kunihiko, Shunan-shi, Yamaguchi 745-8648 (JP)
(74) Representative: Canzler & Bergmeier Patentanwälte Partnerschaft mbB
(86) International application number: PCT/JP2019/050025
(87) International publication number: WO 2020/137853

(57) **Abstract**

When a chlorosilane is manufactured through the reaction of a metallic silicon and hydrogen chloride, the present invention provides a metallic silicon powder with an oil adhesion quantity of 5ppmw or less as the metallic silicon in the reaction.

## Description

### Technical Field

The present invention relates to a novel method for producing chlorosilanes. Specifically, the present invention provides a method for producing chlorosilanes, enabling effectively reducing production of a compound which is difficult to be separated in purification of the obtained chlorosilanes, by limiting an amount of oil adhering to metallic silicon as a raw material when producing chlorosilanes by a reaction between the metallic silicon and hydrogen chloride.

### Background Art

Chlorosilanes used in production of high-purity polysilicon represented by the Siemens method are produced by purifying chlorosilanes obtained by a chlorination reaction of metallic silicon.

Further, production of the above metallic silicon is carried out by using a silicon raw material represented by silica stone and a reducing material such as charcoal, coke, coal, and wood chips, filling an arc furnace with a mixture of the above materials as a raw material layer, heating the raw material layer at a high temperature of 2300K to 2800K, and reducing the silica stone (see Non-Patent Literature 1).

The metallic silicon obtained by the above method is obtained as a large block. Since the chlorination reaction of the metallic silicon is generally carried out on a fluidized bed, the above metallic silicon block is pulverized into a powder with a predetermined particle size and then subjected to the reaction.

Further, high purification of the chlorosilanes is important for obtaining the high-purity polysilicon in a method for producing polysilicon using the chlorosilanes, and crude chlorosilanes obtained by the reaction are highly purified by distillation.

However, it is confirmed that the chlorosilanes obtained by the reaction of the metallic silicon and the hydrogen chloride contain isopentane having a boiling point close to that of trichlorosilane. When such isopentane is contained in trichlorosilane after purification, isopentane is contained as a carbon impurity in polysilicon obtained by using trichlorosilane as a raw material, which causes a problem in semiconductor applications.

Regarding such a problem, it is considered that most of carbon impurities in trichlorosilane are carbon impurities contained in the metallic silicon used in production of trichlorosilane and hydrocarbons produced as by-products from carbon contained in an inner wall material of a reaction furnace or the like (see Patent Literature 1).

However, even if contamination can be reduced by the above measures, there is still room for study on causes of mixing of the carbon impurities and there is room for further improvement on specific countermeasures.

### Citation List

### Patent Literature

Patent Literature 1: Japanese Patent Laid-Open No. 2018-52765

### Non-Patent Literature

Non-Patent Literature 1: Industrial Heating Vol. 46, No. 3 (2009), pp. 1-11, "Current Situation and Issues of Compact Arc Furnace"

### Summary of Invention

### Technical Problem

Accordingly, an object of the present invention is to provide a method for producing chlorosilanes enabling effectively reducing production of a compound, which is difficult to be separated in purification of chlorosilanes and may increase a carbon content of polysilicon obtained in deposition of silicon using the chlorosilanes, when producing chlorosilanes by a reaction between metallic silicon and hydrogen chloride.

### Solution to Problem

As a result of intensive studies on impurities in trichlorosilane produced by a chlorination reaction of metallic silicon and contamination of the above metallic silicon, the inventors of the present invention have found surprisingly that, in the process of taking the metallic silicon, as a block, out of a furnace and pulverizing the metallic silicon, contamination due to oil such as machine oil used in a pulverizing device, a conveying device, or the like is extremely large. Namely, the inventors of the present invention have confirmed that oil, such as lubricating oil present in a driving part of a pulverizing device, a conveying device, or the like for the metallic silicon block, adheres to a contact portion with the metallic silicon in the device in the form of sprays or droplets, adheres to a silicon block or a silicon powder, and is brought into the chlorination reaction, and even if an adhering amount is small, isopentane in an amount that causes a problem in purification is generated.

Further, the inventors of the present invention have found that by using a metallic silicon powder obtained by preventing adhesion of the above oil, an amount of isopentane in chlorosilanes obtained by the chlorination reaction can be reduced to an extremely small level, a load for separating isopentane in distillation when obtaining purified trichlorosilane from the above chlorosilanes can be reduced, and a quality of polysilicon obtained by using the above purified trichlorosilane as a raw material can be further improved. Thus, the present invention has been completed.

Namely, the present invention provides a method for producing chlorosilanes, the method including: using, as metallic silicon, a metallic silicon powder having an oil adhering amount of 5 ppmw or less when producing chlorosilanes by a chlorination reaction of the metallic silicon. The metallic silicon powder is preferably a metallic silicon powder having an average particle diameter of 150 µm to 400 µm.

According to the above method, after the reaction, chlorosilanes having a concentration of isopentane of 1 ppmmol or less can be obtained. In the present invention, the chlorosilanes include trichlorosilane, tetrachlorosilane, and dichlorosilane.

### Advantageous Effects of Invention

According to the method of the present invention, by using a metallic silicon powder in which the oil adhering amount is reduced, it is possible to effectively reduce a generation amount of isopentane during a chlorination reaction of metallic silicon and to produce chlorosilanes in which a content of isopentane is extremely small.

Therefore, removal of isopentane in purification is not required for the chlorosilanes obtained by the above reaction, a purification process can be simplified, and even in a silicon deposition step, since the amount of isopentane in the chlorosilanes as raw materials is remarkably small, the content of impurity carbon in the obtained polysilicon can be reduced.

### Description of Embodiments

A method for producing chlorosilanes according to the present invention is characterized in that an oil adhering amount with respect to a metallic silicon powder used as a raw material is 5 ppmw or less, and preferably 3 ppmw or less.

The oil adhering amount with respect to the metallic silicon powder is measured according to a method described in Examples.

As described above, the metallic silicon is produced by using a silicon raw material represented by silica stone (including silica sand) and a reducing material such as charcoal, coke, coal, and wood chips, filling an arc furnace with a mixture of the above materials as a raw material layer, heating the raw material layer at a high temperature of 2300 K to 2800K, and reducing the silica stone, and thus is obtained as a large block having a weight of about 1000 kg to 2000 kg. Namely, in the present invention, it is preferable that the metallic silicon is arc furnace silica stone reduced silicon obtained by reducing silica stone in an arc furnace.

In order to use the metallic silicon obtained as a block for production of chlorosilanes, the metallic silicon is crushed to obtain a metallic silicon powder. Namely, in the present invention, the metallic silicon powder is preferably a metallic silicon pulverized powder obtained by crushing the metallic silicon.

The metallic silicon powder preferably has a size suitable for a reaction described later in detail. Specifically, an average particle diameter of the metallic silicon powder is preferably 150 µm to 400 µm, and more preferably 180 µm to 300 µm. In the present invention, the average particle diameter is defined as a particle diameter (median diameter) when the metallic silicon powder is classified by using a vibration sieving machine having a plurality of sieves and each fraction is cumulatively added from a minimum fraction to 50 wt%.

More specifically, a vibration sieving machine on which sieves adapted to a test sieve defined in JIS Z 8801-1 and having nominal openings of 500 µm, 355 µm, 250 µm, 212 µm, 150 µm, 106 µm, and 45 µm are mounted in a stacked manner is used for classification.

For the above crushing, a crushing device such as a jaw crusher or a roll mill is industrially used. Further, the metallic silicon powder obtained by crushing is transferred by a conveying device such as a belt conveyor, packaged as necessary, and supplied to a step of producing chlorosilanes by a chlorination reaction.

However, the inventors of the present invention have confirmed that oil represented by machine oil adheres to the surface of the silicon powder passing through the above crushing device or conveying device. Namely, contamination of the silicone powder due to the oil is caused when machine oil, which is used for maintaining lubricity of a driving part and a sliding part provided with the crushing device, the conveying device, and the like, adheres to a contact surface with silicon in the device in the form of sprays, droplets, leaching, or the like, and is transferred to the silicon block or the surface of the silicon powder after crushing.

The above oil is mainly composed of a saturated hydrocarbon or an unsaturated hydrocarbon having a relatively high boiling point and causes generation of isopentane in the chlorination reaction of the metallic silicon. In the present invention, the above oil is a substance extracted by n-hexane at 25°C. A specific n-hexane extraction method will be described in detail in the following Examples.

The oil adhering amount with respect to the above metallic silicon powder refers to an amount per unit weight of the metallic silicon powder obtained by a method of extracting the oil from a specific amount of the metallic silicon powder sampled randomly by using the n-hexane extraction method and quantitatively analyzing the oil.

In the present invention, when the oil adhering amount in the metallic silicon powder is reduced to 5 ppmw or less, and preferably 3 ppmw or less, it is possible to reduce the content of isopentane in the chlorosilanes obtained by the reaction between the metallic silicon powder and hydrogen chloride to such an extent that purification is not necessary.

In the present invention, the method for reducing the oil adhering amount with respect to the silicon powder within the above range is not particularly limited, and the following methods are preferably used alone or in combination.
1. A method in which before a metallic silicon block is supplied to a crusher such as a jaw crusher or a jet mill, a size of the metallic silicon block is reduced as much as possible by a crushing means causing small oil contamination such as manual breaking, and specifically, the size of the metallic silicon block is crushed to a powder with an equivalent circle diameter of 10 cm or less, and preferably 5 cm or less, whereby the processing time by the crusher is reduced.
2. A method in which a worker wears a protective tool causing less oil contamination when a bulky metallic silicon block taken out of an arc furnace is coarsely broken. Specifically, a method in which the worker riding on a bulky silicon block coarsely breaks the bulky silicon block with a hammer, and shoe soles that come into contact with silicon are covered with, for example, a protective tool made of a polyethylene film, or the worker wears gloves to prevent sebum from adhering when handling silicon and a material causing less oil contamination is selected as a material of the gloves.
3. A method in which in a device handling a silicon block, oil adhered to a coating or a surface of a pipe is wiped off in advance.
4. A method in which a sliding part and a driving part provided with a pulverizing device, a conveyor, and the like are sealed to prevent splashing oil. As an example, a method in which an oil receiver is disposed in a hoist for transportation of a silicon block.
5. A method in which a silicon block before crushing or a silicon powder after crushing is washed with an organic solvent having a boiling point far from a boiling point of trichlorosilane, for example, isopropyl alcohol, to remove oil.

In the present invention, as a method for producing chlorosilanes by using the metallic silicon powder, a known method for obtaining chlorosilanes by a chlorination reaction of metallic silicon is adopted without particular limitation.

For example, a method for producing chlorosilanes by reacting the silicon powder with hydrogen chloride in a fluidized bed is mentioned.

As the above hydrogen chloride, various kinds of hydrogen chlorides industrially available can be used. A known fluidized bed type reactor capable of forming the fluidized bed is used for the reaction. A supply amount of the metallic silicon powder and the hydrogen chloride is not particularly limited as long as the metallic silicon powder and the hydrogen chloride can be supplied at a speed at which the fluidized bed can be formed.

A reaction temperature in the reaction is appropriately determined in consideration of a material and a capacity of a reactor, and a catalyst, and the like, and is generally set in a range of 200°C to 500°C, and preferably in a range of 250°C to 450°C.

In the method for producing chlorosilanes of the present invention, chlorosilanes are obtained as a product by the above reaction. A concentration of isopentane in the obtained product is 1 ppmmol or less. In particular, purified chlorosilanes having a reduced amount of isopentane by a known purification method, for example, trichlorosilane, can be obtained without adopting special means for separating and purifying isopentane.

Specifically, a reaction product gas containing the chlorosilanes obtained by the chlorination reaction of the metallic silicon is cooled and recovered as a chlorosilane condensate and then supplied to a high boiling fraction distillation column, and after a high boiling fraction containing tetrachlorosilane as a main component is separated from the bottom of the column, chlorosilanes from which the high boiling fraction as a distillate is separated are obtained. After the above chlorosilanes are supplied to a low boiling fraction distillation column and a low boiling fraction containing dichlorosilane as a main component is separated from the top of the column as a distillate, purified trichlorosilane can be obtained as a bottom fluid.

In the present invention, since almost isopentane is not present in the above purified trichlorosilane, it is not necessary to install a large-scale rectification column for removing isopentane.

In the distillation, as a distillation column, for example, a high boiling fraction distillation column and a low boiling fraction distillation column are adopted without particular limitation under known operation conditions. For example, the above high boiling fraction distillation column is not particularly limited as long as a high boiling fraction containing tetrachlorosilane (bp. 57°C) as a main component can be taken out from a column bottom side, and chlorosilanes from which tetrachlorosilane as a distillate from a column top side is separated and removed can be obtained. In order to further enhance recovery efficiency of trichlorosilane, it is preferable to manage a concentration of the bottom fluid such that a concentration of tetrachlorosilane is 70 mol% or more, and more preferably 90 mol% or more, as a composition of the bottom fluid.

The high boiling fraction containing tetrachlorosilane as a main component and extracted from the bottom side of the above high boiling fraction distillation column may be discarded, or may be used for other products or may be supplied to a chlorination reaction step of the metallic silicon, which is efficient.

The low boiling fraction distillation column is not particularly limited as long as a low boiling fraction containing dichlorosilane (bp. 8.2°C) as a main component can be taken out from the chlorosilanes and the purified trichlorosilane can be obtained as a bottom fluid from the column bottom side. Conditions of the distillation operation also depend on the low boiling fraction contained, and the distillation is preferably carried out under such conditions that trichlorosilane is contained in an amount of 30 mol% or more, and preferably 35 mol% to 45 mol%, in the low boiling fraction containing dichlorosilane as a main component. Namely, by distillation under such a condition that trichlorosilane in an amount within the above range is contained in the low boiling fraction, hydrocarbons such as methane, propane, butane, isobutane, and chlorides of phosphorus or boron, of which structures are unclear, in the purified trichlorosilane are unclear, but chlorides of phosphorus or boron can be efficiently separated.

The low boiling fraction containing the above dichlorosilane as a main component and obtained from a column top part of the low boiling fraction distillation column may be discarded, or may be used for other products or may be supplied to the chlorination reaction step of the metallic silicon, which is efficient.

In the present invention, the trichlorosilane obtained by the purification is used as a raw material for a deposition reaction of silicon by, for example, the Siemens method, whereby polysilicon having a reduced content of carbon impurity can be produced.

### [Examples]

Hereinafter, Examples will be shown to more specifically explain the present invention, but the present invention is not limited to these Examples.

In Examples, measurement of oil adhered to a metallic silicon powder was performed by the following method.

### A. Extraction of oil from metallic silicon powder

The oil was extracted by collecting 20 g of metallic silicon powder from each of any 10 places in the obtained metallic silicon powder, charging a total of 200 g of the collected metallic silicon powder and 300 cc of reagent grade n-hexane into a 500 cc beaker (inner diameter: 88 mm), and applying, with a probe having a diameter of 1 cm and inserted into the liquid by 5 cm, ultrasonic waves to the liquid for 30 minutes at an output of 50 W at room temperature (25°C).

### B. Filtration

After the above extraction operation, filtration was performed by using filter paper made of cellulose having an opening of 7 µm, and a hexane solution in which the oil was dissolved was sorted.

### C. Removal of n-hexane (drying)

A total amount of the sorted n-hexane solution was collected in an evaporation dish (weight: W1), and n-hexane was separated by an evaporator under a temperature of 40°C and dried.

### D. Oil measurement

A weight (W2) of the evaporation dish after drying was measured, an oil amount was calculated by subtracting the weight (W1) of the evaporation dish, and the obtained value was converted into an oil adhering amount per unit weight of the metallic silicon powder and was indicated as "ppmw".

In Examples, the average particle diameter of the metallic silicon powder was measured as follows.

In a vibration sieving machine on which sieves adapted to a test sieve defined in JIS Z 8801-1 and having nominal openings of 500 µm, 355 µm, 250 µm, 212 µm, 150 µm, 106 µm, and 45 µm were mounted in a stacked manner, 100 g of the metallic silicon powder was put and classification was performed for 15 minutes. After classification, the average particle diameter of the metallic silicon powder was defined as a particle diameter when each fraction was cumulatively added from the minimum fraction to 50 wt%.

### [Example 1]

In handling of a metallic silicon block obtained by an arc method using silica sand as a raw material, gloves and boots on which oil on surfaces was sufficiently washed were used, an oil receiver was provided in a driving part of a hoist for transportation to prevent oil droplets from adhering to the metallic silicon block, and further, an oil-less pulverizing device was used as a pulverizing device to prevent adhesion of oil as much as possible, so that a metallic silicon powder having an average particle diameter of 169 µm was obtained.

The oil amount in the metallic silicon powder was 2.1 ppmw.

After the metallic silicon powder thus obtained and hydrogen chloride were reacted in a fluidized bed type reactor, exhaust gas from the above fluidized bed type reactor was cooled and condensed to obtain chlorosilanes as a product.

A generation amount of isopentane in the obtained chlorosilanes was measured by gas chromatography (GC-FID) using a hydrogen flame ionization detector and was found to be 0.214 ppmmol.

The above chlorosilanes were purified in distillation columns, and a concentration of isopentane in the obtained purified trichlorosilane was measured by a gas chromatography-mass spectrometer (GC-MS) and was found to be less than or equal to a detection lower limit.

### [Examples 2 and 3]

A metallic silicon powder was obtained in the same manner as in Example 1 except that the oil adhesion prevention means was changed to change the oil adhering amount.

The oil amount of the above metallic silicon powder is shown in Table 1. In the same manner as in Example 1, a generation amount of isopentane in chlorosilanes obtained by reacting the metallic silicon powder with hydrogen chloride and cooling and condensing the obtained exhaust gas is also shown in Table 1. Further, a concentration of isopentane in trichlorosilane obtained by purifying the above trichlorosilanes in distillation columns is also shown in Table 1.

**[Table 1]**

| No. | Oil amount [ppmw] in metallic silicon powder | Concentration [ppmmol] of isopentane in chlorosilanes | Concentration [ppmmol] of isopentane in trichlorosilane |
|---|---|---|---|
| Example 2 | 2.8 | 0.408 | Detection limit or less |
| Example 3 | 3.4 | 0.770 | 0.003 |

### [Comparative Example 1]

A metallic silicon powder was obtained in the same manner as in Example 1 except that no oil adhesion prevention means was adopted.

An oil amount in the above metallic silicon powder was 8.0 ppmw. Further, in the same manner as in Example 1, a generation amount of isopentane in chlorosilanes obtained by reacting the metallic silicon powder with hydrogen chloride (HCl) and cooling and condensing the obtained exhaust gas was 1.605 ppmmol. Furthermore, a concentration of isopentane in trichlorosilane obtained by purifying the above trichlorosilanes in the same distillation columns as in Example 1 was 0.010 ppmmol.

## Claims

1. A method for producing chlorosilanes, comprising:
using, as metallic silicon, a metallic silicon powder having an oil adhering amount of 5 ppmw or less when producing chlorosilanes by a reaction between the metallic silicon and hydrogen chloride.

2. The method for producing chlorosilanes according to claim 1, wherein
an average particle diameter of the metallic silicon powder is 150 µm to 400 µm.

3. The method for producing chlorosilanes according to claim 1 or 2, wherein
a concentration of isopentane in chlorosilanes after the reaction is 1 ppmmol or less.

4. A metallic silicon powder, wherein
an oil adhering amount is 5 ppmw or less.

5. The metallic silicon powder according to claim 4, which has an average particle diameter of 150 µm to 400 µm.
